Europäisches Patentamt

European Patent Office

Office européen des brevets

(11) Publication number: **0 318 415**
**A2**

# EUROPEAN PATENT APPLICATION

(21) Application number: **88630143.1**

(22) Date of filing: **03.08.88**

(51) Int. Cl.⁴: **C 08 J 5/06**
**B 29 C 67/14, B 29 C 33/40,**
**C 08 L 27/12**
**// B29C43/10**

(30) Priority: **08.09.87 US 93937**

(43) Date of publication of application:
**31.05.89 Bulletin 89/22**

(84) Designated Contracting States: **DE FR GB IT**

(71) Applicant: **UNITED TECHNOLOGIES CORPORATION**
**United Technologies Building 1, Financial Plaza**
**Hartford, CT 06101 (US)**

(72) Inventor: **Dublinski, Alex Charles**
**4 Youngs Apple Orchard Road**
**Northford Connecticut 06472 (US)**

**Kornitzky, Michael Alan**
**41 Peddlars Drive**
**Branford Connecticut 06405 (US)**

(74) Representative: **Schmitz, Jean-Marie et al**
**OFFICE DENNEMEYER S.à.r.l. P.O. Box 1502**
**L-1015 Luxembourg (LU)**

The title of the invention has been amended (Guidelines for Examination in the EPO, A-III, 7.3).

(54) **Method for making a flexible fluoroelastomer reinforced with a polyaramide fibre, and its use as tooling material.**

(57) A method of making a flexible composite tool particularly adapted for composite molding and the composite tool made by this method. The method includes dissolving a B-staged fluoroelastomer in a suitable solvent such as methyl ethyl ketone or toluene to form a fluoroelastomer solution. A fabric is then coated with the fluoroelastomer solution. The solvent is evaporated and the impregnated fabric is sandwiched between unreinforced sheets to form a reinforced tooling material. The reinforced tooling material is laid up with alternating layers of unreinforced fluoroelastomer and then cured to form a composite tool which is stable through a plurality thermal cycle. The tool is useful in molding composites and is reusable. The life of the tool is further prolonged by a described method of repairing damaged portions of the tool.

EP 0 318 415 A2

## Description

### Solution Coating Technique for a B-Staged Polyaramid Fiber Reinforced Fluoroelastomer Tooling Material

Technical Field

This invention relates to molding of composites, and more particularly, the materials used for vacuum bag molding.

Background Art

There are various methods of molding composites. One method involves matched metal molds in which two halves of a mold are pressed together and heated (cured) to form an article. Although this can be a very accurate method, the cost of manufacturing the matched metal molds is very high, making the process uneconomical for small production runs. In addition, slight inaccuracies in the layup can cause large variations in the properties of the cured composite. Another method which has had widespread use is vacuum bag molding. A thin film, typically nylon, is placed over the article to be molded, forming a bag type enclosure, and a vacuum is drawn on the bag prior to heating the assembly to cure the composite material. For high quality material, the assembly is placed in an autoclave and external pressure is applied during the cure. While the vacuum bag molding method is lower in cost and more tolerant to material variations or layup inaccuracies than the matched metal molding method, the bags tend to wrinkle and cause the molded article to have an uneven surface. Also, the vacuum bag can catch on high points in the layup and bridge, or fail to contact the entire surface. Bridging results in either improper compaction or stretching of the bag beyond its yield point with resultant failure of the bag. In either case, the properties of the cured material are degraded. Finally, there is a great deal of labor involved in placing the bags over the composite articles and sealing them, and the bags can only be used once.

Another type of vacuum bag is made from silicone rubber, either reinforced, or unreinforced. This bag is designed to be reusable, however, the silicone materials tend to interact with the curing agents used in the composites and they become brittle. This results in relatively short lifetimes.

Accordingly, there has been an ongoing search in the art for a reusable tooling material which is flexible enough to conform to the part surface and provide uniform cure pressure, and yet sturdy enough to withstand the rigors of material handling and chemical interaction with the curing resin.

Disclosure of the Invention

This invention is directed to a method of making a flexible composite tool particularly adapted for composite molding and the resulting tool wherein the tool is reusable. The method comprises dissolving B-staged fluoroelastomer in a suitable solvent to form a fluoroelastomer solution. A fabric is then coated with the fluoroelastomer solution. The solvent is evaporated and the coated fabric is calendered or rolled between two unreinforced sheets to form a reinforced tooling material. The reinforced tooling material is laid up over a model of the desired shape and cured to form a composite tool which is stable through a plurality of thermal and chemical cycles.

Another aspect of this invention relates to molding composites using the described reusable tool. Prepregs or fiber reinforced polymer sheets are laid up on the reusable tool. Pressure and heat are applied to cure the prepreg or sheets and form the composite. The composite is removed and the tool is ready to use again. It is estimated that the tool will last through at least 50 to 100 cycles (instead of the 1 cycle for conventional vacuum bags) and if the tool becomes damaged, a method of repairing the damaged portion is described to further prolong the life of the tool.

Other features and advantages of the present invention will become apparent in light of the following description thereof.

Best Mode for Carrying Out the Invention

The fluoroelastomer solution comprises a B-staged fluoroelastomer and a suitable solvent. "B-staged fluoroelastomer" means a fluoroelastomer which has been partially cured, may be chain extended, but is not cross-linked. A B-staged fluoroelastomer is flowable and stretchable, but is not tacky.

The fluoroelastomer is made of fluoroelastomer resin, chain extenders, reactive and/or nonreactive fillers, and curing agents which will react when the compound's temperature is raised. Fluoroelastomers are preferred because of their inertness and high use temperatures. Inertness is preferred in the molding process to reduce the reaction between the resin that is being molded and the tooling material. Fluoroelastomers are also preferred because they tend to have higher use temperatures than their bromine or chlorine analogues. Most preferred are fluoroelastomers which produce a rubber with a hardness of about 70 durometers to about 80 durometers because of its intended application as a flexible tool. It is believed that any halogenated elastomers, fluorosilicone elastomers or fluorophosphazene elastomers could be used in the practice of this invention. Exemplary materials are Fluorel® fluoroelastomer supplied by 3M Company, St. Paul, Minnesota; and Viton® fluoroelastomer manufactured by E. I. DuPont DeNemours Corporation, Wilmington, DE.

A suitable solvent must be chosen. The solvent must dissolve the fluoroelastomer completely, which means that there is no fluoroelastomer precipitate and that higher weight polymers are not left undissolved. Methyl ethyl ketone (2-butanone) and toluene (methylbenzene) are preferred solvents, but typically any alkyl aromatic solvent can also be used. Typically about 80% by volume to about 99% by volume of solvent is used. Preferably, the fluoroelastomer solution comprises about 90% to about 95% by volume solvent. If too little solvent is used, then the solution is too viscous and will not properly impregnate the fibers, while if too much solvent is used, then very little fluoroelastomer is impregnated into the fibers and more impregnation cycles are required. The solvent serves two functions. It dissolves the fluoroelastomer allowing impregnation and also washes any residues of the cleaning process from the fiber. Without the final cleansing action of the solvent, the fluoroelastomer may not stick to the fiber.

Typically, the fluoroelastomer compound used comprises the fluoroelastomer resin and several additives which may include agents (such as dicyanamide or bisphenol A), fillers (such as carbon black), or scavengers (such as magnesium oxide or calcium oxide).

Polyaramid fiber such as Kevlar® fiber, commercially available from E. I. DuPont DeNemours, Wilmington, DE, and other companies, is the preferred fiber to use in the invention. However, other fibers could be used also, such as graphite or glass fibers. Polyaramid fibers are preferred because of their high tear strength properties. Polyaramid fibers are also a good choice because of their high tensile properties including both strength and modulus.

Typically, the fluoroelastomer solution is coated onto a fabric, which is a plurality of interwoven bundles of fibers. Typically, for this application, each bundle comprises 6000 fibers. Typical fabrics, used for this application, have between 10 and 15 bundles per inch in the warp and fill directions. An exemplary fabric is Clarkschwebel Textile Company's, style 354, which is a symmetrical basket weave material with 13 bundles per inch in both directions. Various styles of fabric and deniers of yarn can be used. The fabric normally has approximately the same strength in both the warp and the fill directions (parallel to the orthogonal fiber axes), although other weaves can be used. Elongation of the material is very low in the warp and full directions, but high in the bias directions.

In this process chosen fabric is impregnated with the fluoroelastomer solution. In the impregnation process, the fluoroelastomer solution may be applied to the fabric in a variety of ways. For example, the fluoroelastomer solution could be brushed onto the fabric with an instrument similar to a paint brush, or a series of rollers could be used to roll the fabric through a trough to coat the fluoroelastomer solution onto the fabric. Other methods which could be used to impregnate the fabric could include pressure impregnation, where a series of nozzles would be used to force the solution into and through the fabric. Another method, which would work with a more viscous solution, would be to use a doctor blade to apply a uniform thickness of the material and a series of rollers to work the material into the fabric.

It is preferred that the polyaramid fabric be completely impregnated by the fluoroelastomer solution. If not, the bare polyaramid fabric can act like a wick and pick up water. Preferably polyaramid fabrics should be kept dry. It is preferred that every fiber is totally encapsulated by fluoroelastomer. If the Kevlar® fabric is not dried before the impregnation process, or the fibers are not completely coated, the accumulation of water generated by the condensation reactions occuring during curing can cause delamination of the layered structure and subsequent failure of the tool made from this material.

The solvent is evaporated using conventional methods. The solvent is either flashed off at elevated temperatures (but below that required to cure the fluoroelastomer) or evaporated at room temperature over a longer period of time. Preferably all of the solvent is evaporated before encapsulation of the impregnated fabric between the layers of unreinforced fluoroelastomer takes place or the trapped solvent may vaporize during the cure process and cause failure of the material.

After the fabric has been impregnated with the fluoroelastomer and encapsulated with fluoroelastomer, the material can be fabricated into a tool. First, reinforced tooling material is fabricated by sandwiching the impregnated material between thin cover sheets of unreinforced material. Typical methods of sandwiching these layers would be calendering (rolling) or pressing. No adhesive is needed which is especially beneficial because adhesive is subject to thermal degradation and could subtract from the life of the tooling material or subsequent tool. Second, alternating layers of the reinforced and unreinforced materials are laid up over a model of the shape that is desired. Finally, the layup is cured to form a tool (such as a semirigid locator caul). The curing process takes place in two phases, cure and post cure. The cure phase is typically at about 300-400°F for about 3-5 hours at about 100-200 psi pressure. The post-curing phase is typically at about 400-500°F for about 8-10 hours at atmospheric pressure with no restraint. During the cure and post cure, hydrogen fluoride and water are evolved. Although these are in low concentrations, it is preferred that acidic residue on metal tooling after the cure cycle is removed.

## EXAMPLE

50 grams of B-staged fluoroelastomer was dissolved in 9 ounces of 2-butanone. The solution was coated onto both sides of a 6 inch by 6 inch Kevlar® sheet with a brush. The fabric was allowed to air dry for 30 minutes at room temperature to evaporate the solvent. Another coating of dissolved B-staged fluoroelastomer was brushed onto each side by dissolving 100 grams of B-staged fluoroelastomer in 9 ounces of 2-butanone and applying the solution to the fabric. The fabric was again allowed to air dry for 30 minutes at room temperature to evaporate the solvent. This material was then sandwiched between two unreinforced B-staged fluoroelastomer sheets to form a test coupon.

For a full scale test, fifty yards of Kevlar polyaramid fabric was impregnated (with the above B-staged fluoroelastomer solutions) and evaporated using a series of rollers and troughs in 47 minutes in a conventional oven at about 175°-180°F. This process was repeated three times to ensure better impregnation. After evaporation the impregnated fabric was sandwiched between unreinforced B-staged fluoroelastomer sheets by calendering the sheets onto the fabric. No adhesive was needed. The reinforced tooling material and unreinforced fluoroelastomer were alternately laid up over a model of the desired shape and cured at 350°F for 4 hours at 100 psi and then post cured at 450°F for 8 hours at atmospheric pressure with no restraint in a conventional oven.

The resulting solution coated fluoroelastomer impregnated fabric tool can be used to mold composites. Typically, at least one layer of a fabric which has been preimpregnated with a polymer material (prepreg) is laid up on the tool. Heat and pressure are conventionally applied to cure the preimpregnated fabric to form a composite. Other conventionally known methods for molding composites using this tool will be apparent to those skilled in the art.

The solution coated fluoroelastomer impregnated fabric tool is an improvement over the adhesive coated fabric used previously. With the adhesive coated material, the adhesive was not compatible with the polyaramid fabric reinforcement and the tools failed prematurely. The fluoroelastomer impregnated fabric tool approach to manufacturing composite parts has several advantages over currently used vacuum bags. The tool is stable throughtout a plurality of thermal cycles and therefore is reusable. Testing has demonstrated that at least 50 parts can be produced from one tool, while conventional vacuum bags produce only one part and are usable only once. It is estimated that at least 100 parts will be obtainable from a tool before it must be replaced. Another advantage is that the tooling material is not seriously attacked by the amine curing agents found in conventional epoxy resins and the mechanical properties of the fluoroelastomer material do not degrade with time. Minor damage to the surface of the tool can also be repaired by coating the damaged portion with a fluoroelastomer solution similar to that used to impregnate the fabric. This gives increased tooling life. In addition, the tool accurately locates the internal details of a composite part and gives improved surface definition to those surfaces of the part in contact with the tool. This leads to superior quality parts.

It should be understood that the invention is not limited to any particular embodiment shown and described herein, but that various changes and modifications may be made without departing from the spirit or scope of this concept as defined by the following claims.

## Claims

1. A method of making flexible composite tooling particularly adapted for composite molding comprising:

    a) dissolving B-staged fluoroelastomer in a suitable solvent to form a fluoroelastomer solution;

    b) impregnating a fabric having fibers with the fluoroelastomer solution;

    c) evaporating the solvent;

    d) sandwiching the impregnated fabric between unreinforced B-staged fluoroelastomer sheets to form a reinforced tooling material;

    e) placing layers of the reinforced and unreinforced material over a shaped model of the part to be created to form a layup; and

    f) curing the layup to form a composite tool; wherein the composite tool is stable throughout a plurality of thermal cycles.

2. A method as claimed in claim 1 in which the solvent is 2-butanone.

3. A method as claimed in claim 1 in which the solvent is methylbenzene.

4. A method as claimed in claim 1 in which the solvent comprises 90% by volume to 95% by volume of the fluoroelastomer solution.

5. A method as claimed in claim 1 in which the fabric is a polyaramid fabric.

6. A method as claimed in claim 1 in which the solvent is evaporated at a temperature below the curing temperature of the fluoroelastomer.

7. A method of molding composites comprising, laying up at least one layer of a preimpregnated fabric on a flexible tool applying heat and pressure to cure at least one layer to form a composite wherein the improvement comprises said flexible tool being made by the method of claim 1.

8. A method of molding composites comprising laying up at least one layer of a preimpregnated fabric on a flexible tool applying heat and pressure wherein the improvement comprises said flexible tool comprising a fluoroelastomer impregnated polyaramid fabric.

9. A reusable flexible tool particularly adapted for molding composites comprising a fluoroelastomer impregnated polyaramid fabric sandwiched between unreinforced fluoroelastomer sheets.

10. A method of repairing a tool having a damaged portion comprising coating the damaged portion with a solution comprising B-staged fluoroelastomer and a suitable solvent, and then allowing the tool to dry; wherein the repaired tool is stable throughout a plurality of thermal cycles.

11. A flexible tool made by the process of claim 1.